Europäisches Patentamt

European Patent Office

Office européen des brevets

(19)

(11) **EP 0 884 099 A2**

(12) **EUROPEAN PATENT APPLICATION**

(43) Date of publication:
**16.12.1998 Bulletin 1998/51**

(51) Int Cl.$^6$: **B01J 7/00**, F01K 11/02,
F22B 1/22, F02C 3/00

(21) Application number: **98304538.6**

(22) Date of filing: **09.06.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.06.1997 JP 151073/97**
**26.06.1997 JP 170655/97**

(71) Applicant: **DAIDO HOXAN INC.**
**Sapporo-shi, Hokkaido 060 (JP)**

(72) Inventors:
• **Yoshino, Akira c/o Daido Hoxan, Inc**
**Osaka 592 (JP)**
• **Kiyama, Hiromi c/o Daido Hoxan, Inc**
**Osaka 592 (JP)**

• **Miyamoto, Atsushi c/o Daido Hoxan, Inc**
**Osaka 592 (JP)**
• **Kikuchi, Nobutaka c/o Daido Hoxan, Inc**
**Osaka 592 (JP)**

(74) Representative: **Frankland, Nigel Howard**
**FORRESTER & BOEHMERT**
**Franz-Joseph-Strasse 38**
**80801 München (DE)**

Remarks:
A request for correction to the reference in Claim 9 has been filed pursuant to Rule 88 EPC. A decision on the request will be taken during the proceedings before the Examining Division (Guidelines for Examination in the EPO, A-V, 3.).

(54) **Gas generating apparatus and gas generation process using the same**

(57) The present invention provides a gas generating apparatus which comprises a combustor (3) for reacting a raw material hydrocarbon with oxygen at a high temperature for partial oxidation thereof to produce a gas mixture essentially containing carbon monoxide and hydrogen, and a turbine (5) which is driven by a stream of the gas mixture generated by the combustor (3) for generation of power, wherein the power generated by the turbine is utilized as an effective output. The apparatus of the invention contributes to reduction in the plant scale and the initial costs, and readily meets the demands for plant shift and enhancement of the gas production capacity in the future.

Fig. 1

## Description

## BACKGROUND OF THE INVENTION

### 1. Field of the Invention

The present invention relates to a gas generating apparatus for generating hydrogen and carbon monoxide as a gas mixture from hydrocarbons and oxygen by a partial oxidation method, and to a gas generation process using such a gas generating apparatus.

### 2. Description of the Prior Art

For production of hydrogen gas, a steam reforming method is conventionally employed as well as a water electrolysis method and a partial oxidation method. In the steam reforming method, hydrocarbons such as contained in natural gas, LPG and naphtha are used as a raw material along with steam, and subjected to a steam reforming reaction in the presence of a catalyst. The catalyst used in the steam reforming method is liable to degrade, because the catalyst should be heated up to about 900°C and soot formed after the reaction of the raw material with the steam deposits on the surface of the catalyst. In addition, the steam reforming reaction is endothermic, requiring constant external heat supply. To this end, several tens or several hundreds of 4-inch reaction tubes are provided in a reactor. Therefore, the reactor is large in scale, requiring a great construction cost. Further, the raw material should be supplied in a gaseous form to the reaction tubes, so that only light oils such as naphtha are used as the raw material.

On the contrary, the partial oxidation method for hydrogen production can use less expensive heavy oils as a raw material. The raw material is burnt for partial oxidation thereof with oxygen present in an amount equivalent to 30 to 40% of the amount required for complete combustion of hydrocarbons in the raw material. The partial oxidation reaction affords a gas mixture essentially containing $H_2$ and CO in accordance with the following reaction formula (1):

$$C_nH_m + (n/2)O_2 \rightarrow nCO + (m/2)H_2 \qquad (1)$$

In turn, the gas mixture is subjected to a CO shift process in a CO convertor, and the resulting gas mixture is subjected to refining processes such as a $CO_2$ absorptive removal process and a PSA impurity removal process. Thus, the hydrogen gas is produced.

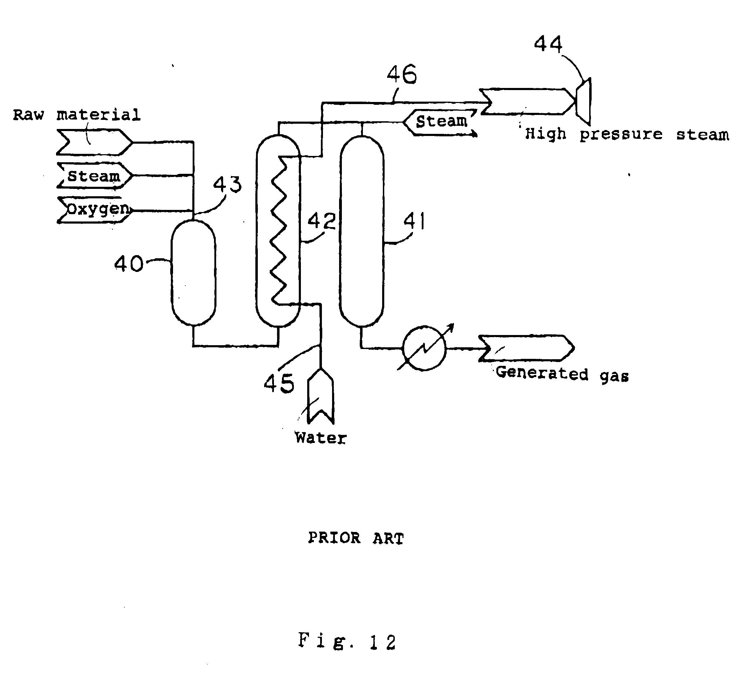

A typical gas generating apparatus for producing hydrogen gas and the like by the partial oxidation method includes a combustor 40, a CO convertor 41 and a high pressure boiler 42, as shown in Fig. 12. Raw material hydrocarbons, steam and oxygen are Introduced into the combustor 40 through an inlet path 43, and subjected to combustion at a high temperature on the order of 1,100 to 1,300°C for the partial oxidation of the raw material hydrocarbons. The resulting gas mixture is cooled in the high pressure boiler 42 and then supplied to the CO convertor 41 for the CO shift conversion. On the other hand, water is fed through a pipe 45 into the high pressure boiler 42, in which high pressure steam is produced by utilizing heat generated in the combustor 40. The heat of the high pressure steam is converted into electric power by a steam turbine 44 for power recovery. In Fig. 12, a reference numeral 46 denotes a pipe for supplying the high pressure steam to the turbine 44.

As described above, the aforesaid gas generating apparatus utilizes the heat generated in the combustor 40 for power generation. More specifically, the high pressure steam is produced by heat-exchanging the high temperature gas mixture produced in the combustor 40 with water in the high pressure boiler 42, and the steam turbine 44 is driven by the high pressure steam, whereby power can be outputted as a shaft output from the steam turbine 44. Therefore, the large-scale high pressure boiler 42, the high-capacity steam turbine 44 and the pipes 45 and 46 are indispensable components of the gas generating apparatus. Where the hydrogen gas is to be produced at a rate of several tens of thousands cubic meters per hour, for example, the high pressure boiler 42 has a diameter of 4m to 5m and a height of 20m to 30m. Thus, the apparatus per se has an increased size. This increases the initial costs such as plant costs and plant construction costs, and leads to frequent occurrence of troubles. Further, it is difficult to meet the demands for plant shift and enhancement of the gas production capacity in the future.

In view of the foregoing, it is an object of the present invention to provide a gas generating apparatus, which contributes to reduction in the plant scale and the initial costs and readily meets the demands for plant shift and enhancement of the gas production capacity in the future, and to provide a gas generation process using such a gas generating apparatus.

## SUMMARY OF THE INVENTION

In accordance with a first aspect of the present invention, there is provided a gas generating apparatus, which comprises: a combustor for reacting a raw material hydrocarbon with oxygen at a high temperature for partial oxidation thereof to produce a gas mixture essentially containing carbon monoxide and hydrogen; and a turbine which is driven by a stream of the gas mixture produced in the combustor for generation of power; wherein the power generated by the turbine can be utilized as an effective output.

In accordance with a second aspect of the present invention, there is provided a gas generation process, which comprises the steps of: supplying a raw material hydrocarbon and oxygen into a combustor; reacting the raw material hydrocarbon with the oxygen at a high temperature in the combustor for partial oxidation thereof for production of a gas mixture essentially containing carbon monoxide and hydrogen; driving a turbine by a stream of the gas mixture produced in the combustor for generation of power; and utilizing the power generated by the turbine as an effective output.

In the gas generating apparatus of the present invention, the gas mixture essentially containing carbon monoxide and hydrogen is produced in the combustor by reacting the raw material hydrocarbon with the oxygen at a high temperature for the partial oxidation thereof, and the turbine is driven by the stream of the gas mixture produced in the combustor. Since the stream of the gas mixture produced in the combustor is used to drive the turbine, the large-scale high pressure boiler conventionally required for cooling the gas mixture produced in the combustor and the high-capacity steam turbine can be obviated. Therefore, the plant scale and the initial costs can be reduced, thereby ensuring easy plant shift and plant extension.

The gas generation process of the present invention employs the aforesaid highly effective gas generating apparatus. The gas mixture essentially containing carbon monoxide and hydrogen is produced in the combustor, and the turbine is driven by the stream of the gas mixture. In the present invention, pure oxygen may be supplied to the combustor for the partial oxidation or, alternatively, air may be supplied to the combustor for utilization of oxygen contained therein for the partial oxidation.

In the present invention, the combustor may be connected to the turbine in series. In such a case, the turbine can be driven by the stream of the gas mixture supplied thereto directly from the combustor with little loss of the gas stream and with a higher efficiency. In addition, the plant scale can be reduced, ensuring easy plant shift and plant extension.

In the present invention, the gas generating apparatus may further comprise a compressor which is provided integrally with the turbine and adapted to be driven by the power generated by the turbine, so that a difference between the power generated by the turbine and power required for the driving of the compressor can be utilized as an effective output. In such a case, part of the power generated by the turbine is utilized for the driving of the compressor, whereby running costs such as an electricity cost can be reduced.

In the present invention, the gas generating apparatus may further comprise a convertor for allowing the carbon monoxide in the gas mixture passed through the turbine to react with steam for CO shift conversion into carbon dioxide and hydrogen. In such a case, the gas mixture produced in the combustor is subjected to the CO shift conversion in the convertor, so that hydrogen gas can be obtained at a high concentration.

## BRIEF DESCRIPTION OF THE DRAWINGS

Fig. 1 is a diagram illustrating the construction of a gas generating apparatus according to a first embodiment of the present invention;
Fig. 2 is a diagram illustrating the construction of a gas generating apparatus according to a second embodiment of the present invention;
Fig. 3 is a diagram illustrating the construction of a gas generating apparatus according to a third embodiment of the present invention;
Fig. 4 is a diagram illustrating the construction of a gas generating apparatus according to a fourth embodiment of the present invention;
Fig. 5 is a diagram illustrating the construction of a gas generating apparatus according to a fifth embodiment of the present invention;
Fig. 6 is a diagram illustrating the construction of a gas generating apparatus according to a sixth embodiment of the present invention;
Fig. 7 is a diagram illustrating the construction of a gas generating apparatus according to a seventh embodiment of the present invention;
Fiq. 8 is a diagram illustrating the construction of a gas generating apparatus according to an eighth embodiment of the present invention;
Fig. 9 is a diagram illustrating the construction of a gas generating apparatus according to a ninth embodiment of the present invention;
Fig. 10 is a diagram illustrating the construction of a gas generating apparatus according to a tenth embodiment of the present invention;
Fig. 11 is a diagram illustrating the construction of a gas generating apparatus according to an eleventh embodiment of the present invention; and
Fig. 12 is a diagram illustrating the construction of a conventional gas generating apparatus.

## DETAILED DESCRIPTION OF THE PREFERRED EMBODIMENTS

With reference to the attached drawings, the present invention will hereinafter be described by way of embodiments thereof.

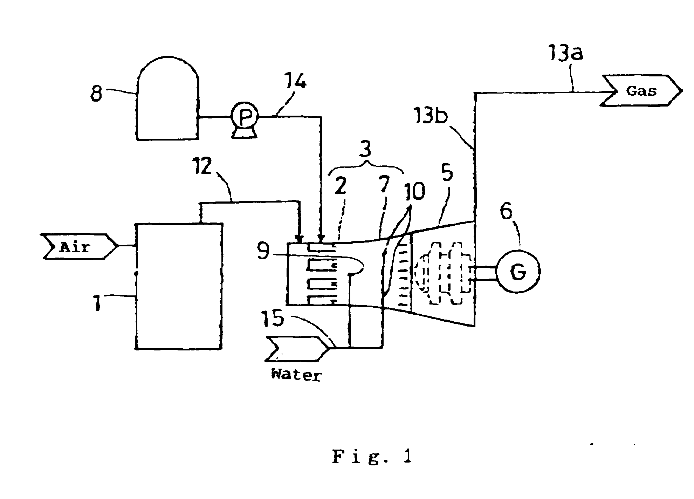

Fig. 1 is a diagram illustrating the construction of a gas generating apparatus according to a first embodiment of the present invention. As shown in Fig. 1, the gas generating apparatus includes a combustor 3 which is supplied with $O_2$ gas produced by an oxygen producing apparatus 1 through an oxygen supplying path 12 and with raw material hydrocarbons from a fuel tank 8 through a fuel supplying path 14. The combustor 3 has a combustion section 2 for burning the raw material hydrocarbons while injecting therein the raw material hydrocarbons and the $O_2$ gas, and a rectification section 7 for rectifying a high temperature and high pressure gas generated in the combustion section 2. A turbine 5 is connected to the rectification section 7 in series and adapted to be driven by a stream of the gas outputted from the combustor 3.

An inlet pipe 15 extends into the rectification section 7 for introducing water or steam therein. The inlet pipe 15 is branched into a plurality of pipes which are respectively provided with a plurality of nozzles 9, 10 at their distal ends. Among these nozzles, first nozzles 9 are provided adjacent the combustion section 2 in the rectification section 7. The combustion temperature is controlled within a proper temperature range by injecting the water or steam from the first nozzles 9 as required.

Second nozzles 10 are provided adjacent the turbine 5 in the rectification section 7. By injecting the water or steam from the second nozzles 10 as required, the temperature of the stream of the gas at an inlet of the turbine 5 is controlled and the inside of the turbine 5 (mainly blades of the turbine 5) is cleaned. In the combustor 3, the raw material hydrocarbons react with the $O_2$ gas at a high temperature in accordance with the reaction formula (1) for partial oxidation thereof, thereby affording a gas mixture essentially containing CO and $H_2$. It is noted that the provision of the first and second nozzles 9 and 10 is not critical and, if not necessary, may be obviated. A reference character 13a denotes a gas outlet path for taking the gas mixture and the steam out of the turbine 5.

The turbine 5 is connected to an electric generator 6 which is driven by the rotation of the turbine 5. The power generated by the turbine 5 is converted into electric power which is, in turn, utilized as an effective output.

The gas generating apparatus is used, for example, in the following manner.

The $O_2$ gas produced by the oxygen producing apparatus 1 is supplied at a predetermined pressure into the combustion section 2 of the combustor 3, while the raw material hydrocarbons are supplied into the combustion section 2 from the fuel tank 8. In the combustor 3, the raw material hydrocarbons react with the $O_2$ in accordance with the reaction formula (1) for production of the gas mixture essentially containing Co and $H_2$. At this time, the inside of the rectification section 7 of the combustor 3 is cooled to some extent by the water or steam fed from the first nozzles 9, so that the inside temperature of the rectification section 7 is controlled suitably for the partial oxidation reaction. Further, the raw material hydrocarbons react with the steam for increasing the production of CO and $H_2$.

The gas mixture produced in the combustor 3 and the steam are supplied into the turbine 5 to drive the turbine 5. The rotation of the turbine 5 drives the electric generator 6, so that the effective output of the turbine 5 can be utilized as an electric power. At this time, the stream of the qas outputted from the combustor 3 is cooled by the water or steam injected from the second nozzles 10 for extension of the service life of the turbine 5. Since the combustor 3 is connected to the turbine 5 in series, the efficiency can be improved with little loss of the gas stream.

With this arrangement, the provision of a large-scale high-pressure boiler is obviated, and the effective output of the turbine 5 can be utilized as an electric power.

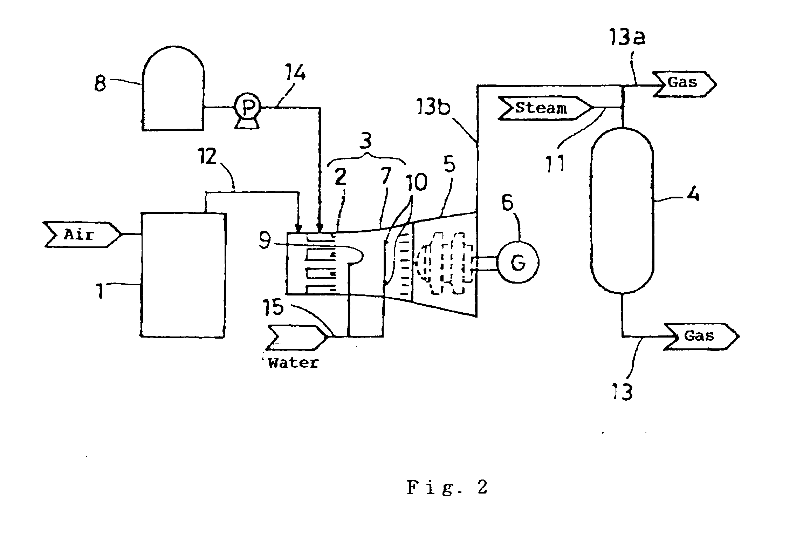

Fig. 2 is a diagram illustrating the construction of a gas generating apparatus according to a second embodiment of the present invention. The apparatus of the second embodiment has substantially the same construction as the apparatus of the first embodiment shown in Fig. 1, except that a CO convertor 4 is provided therein for subjecting the gas mixture outputted from the turbine 5 to CO shift conversion with steam. In Fig. 2, the same components as shown in Fig. 1 are denoted by the same reference characters. A steam supplying path 11 extends into the CO convertor 4 to supply steam thereto as required. The stream of the gas fed into the CO convertor 4 from the turbine 5 is brought into contact with a catalyst filled therein, and CO and $H_2O$ in the gas stream undergoes a reaction represented by the following reaction formula (2) for generation of $CO_2$ and $H_2$:

$$CO + H_2O \Leftrightarrow CO_2 + H_2 \qquad (2)$$

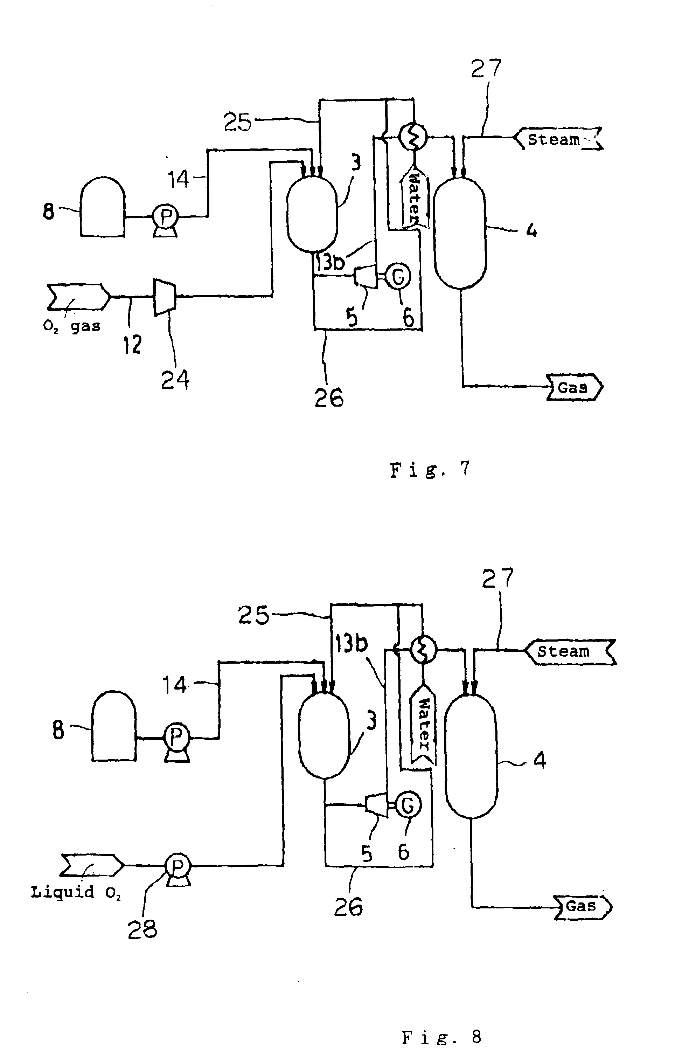

In this apparatus, the water or steam to be fed into the combustor 3 from the inlet pipe 15 may be heat-exchanged for heating thereof in pipe lines (e.g., the gas outlet paths 13, 13a, a turbine outlet pipe 13b and the like) through which the high temperature gas passes (see Fig. 7).

The apparatus is used, for example, in the following manner.

The stream of the gas containing the gas mixture and the steam is introduced into the CO convertor 4 from the turbine 5, and brought into contact with the catalyst. The CO and the steam in the gas stream react with each other in accordance with the aforesaid reaction formula (2) for generation of $CO_2$ and $H_2$. In the CO convertor 4, the CO shift conversion is carried out until the CO concentration of the gas mixture reaches a level on the order of several percents. The hydrogen-rich gas taken out of the gas outlet path 13 is, as required, subjected to refining processes such as a $CO_2$ absorption process, a PSA impurity removal process and a methanation process.

With this arrangement, the water or steam fed into the combustor 3 from the first and second nozzles 9 and 10 is used for the CO shift conversion. This increases the power generation, and improves the efficiency of the partial oxidation reaction and the service life of the turbine 5. Where the water or steam is injected into the combustion section 3 from the first and second nozzles 9 and 10 in such an amount that the gas stream is saturated with steam at the outlet of the turbine 5, the amount of the steam required for the CO shift conversion can be sufficiently covered by the amount of the steam contained in the gas stream outputted from the combustor 3. Additionally, the apparatus has the same advantages as the apparatus shown in Fig. 1.

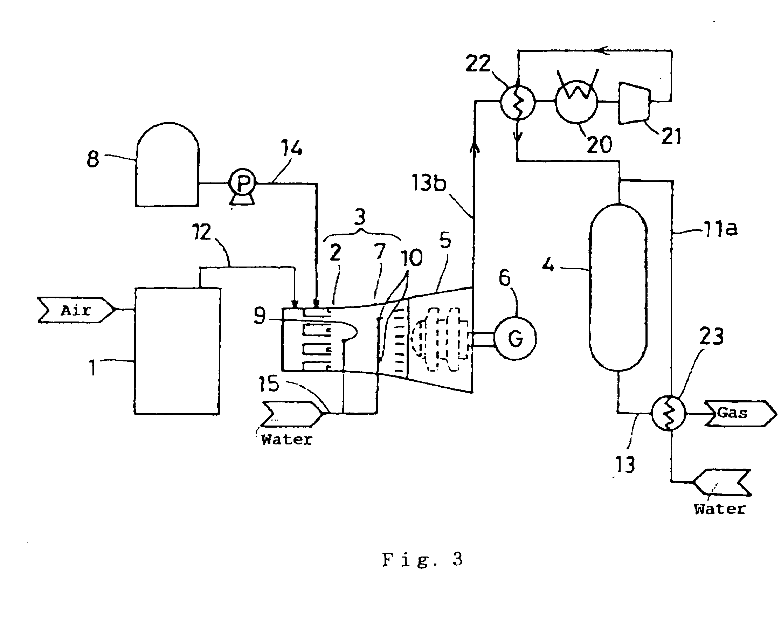

Fig. 3 is a diagram illustrating the construction of a gas generating apparatus according to a third embodiment of the present invention. The apparatus of the third embodiment has substantially the same construction as the apparatus of the second embodiment shown in Fig. 2, except that the apparatus includes a cooler 20 for cooling the gas stream outputted from the turbine 5, a compressor 21 for compressing the gas stream cooled by the cooler 20 and a heat-exchanger 22 for heat-exchanging the gas stream compressed by the compressor 21 with the gas stream to be introduced into the cooler 20, whereby the gas stream outputted from the turbine 5 is introduced into the CO convertor 4 after being compressed at a predetermined pressure. In Fig. 3, the same components as shown in Fig. 2 are denoted by the same reference characters. In Fig. 3, a reference character lla denotes a steam supplying path for supplying steam into the CO convertor 4 after the steam is heated in a heat exchanger 23 provided at the gas outlet path 13.

With this arrangement, the gas taken out through the gas outlet path 13b is compressed at the predetermined pressure. Since the compression of the gas stream outputted from the turbine 5 is carried out before the introduction thereof into the CO convertor 4, the power required for driving the compressor 21 can be reduced in comparison with the case where the gas stream is compressed at the outlet of the CO convertor 4. This is because the amount of the gas mixture is remarkably increased by the CO shift conversion. In this case, however, the steam in the gas stream is cooled to condense, resulting in a shortage in the steam for the CO shift conversion. Therefore, the CO convertor 4 is supplied with the steam required for the CO shift conversion. Additionally, the apparatus has the same advantages as the apparatus shown in Fig. 2.

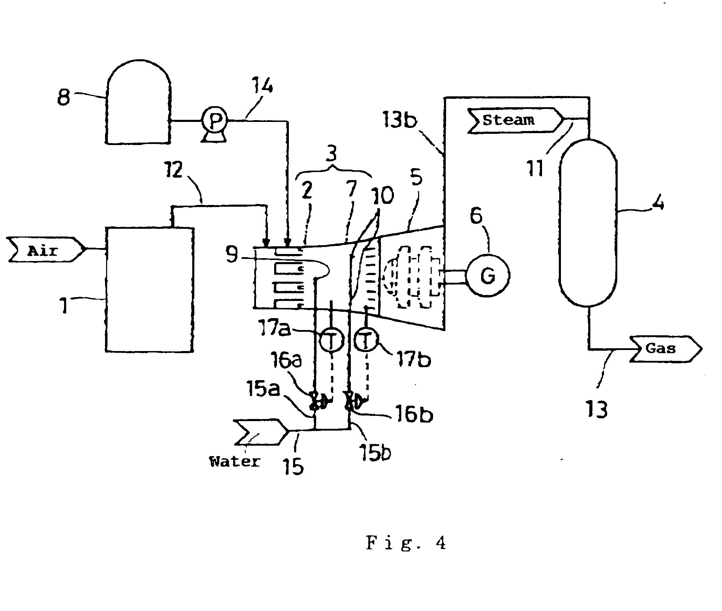

Fig. 4 is a diagram illustrating the construction of a gas generating apparatus according to a fourth embodiment of the present invention. The apparatus of the fourth embodiment has substantially the same construction as the apparatus of the second embodiment shown in Fig. 2 except for the following points. It is noted that the same components as shown in Fig. 2 are denoted by the same reference characters in Fig. 4.

In the apparatus, control valves 16a and 16b are respectively provided at first and second inlet pipes 15a and 15b for feeding water or steam to the first and second nozzles 9 and 10. A first temperature sensor 17a for sensing the reaction temperature within the rectification section 7 and a second temperature sensor 17b for sensing the temperature of the gas stream at the inlet of the turbine 5 are provided in the rectification section 7 of the combustor 3. The control valve 16a is controlled on the basis of a sensing signal indicative of the partial oxidation reaction temperature sensed by the first temperature sensor 17a for controlling the amount of the water or steam to be injected into the combustor 3 from the first nozzles 9. Thus, the partial oxidation reaction temperature at the rectification section 7 is controlled. The control valve 16b is controlled on the basis of a sensing signal indicative of the temperature of the gas stream at the inlet of the turbine 5 sensed by the second temperature sensor 17b for controlling the amount of the water or steam to be injected into the combustor 3 from the second nozzles 10. Thus, the temperature of the gas stream at the inlet of the turbine 5 is controlled. Additionally, the apparatus has the same advantages as the apparatus shown in Fig. 2.

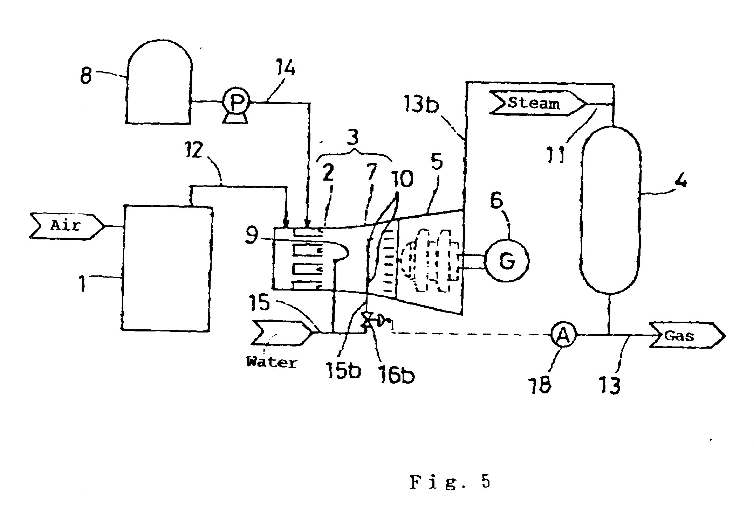

Fig. 5 is a diagram illustrating the construction of a gas generating apparatus according to a fifth embodiment of the present invention. The apparatus of the fifth embodiment has substantially the same construction as the apparatus of the second embodiment shown in Fig. 2 except for the following points. It is noted that the same components as shown in Fig. 2 are denoted by the same reference characters in Fig. 5.

The apparatus includes a control valve 16b provided at a second inlet pipe 15b for feeding water or steam to the second nozzles 10, and a composition analyzer 18 provided at the gas outlet path 13 for analyzing the composition of the gas steam outputted from the CO convertor 4. The composition of the gas stream outputted from the CO convertor 4 is analyzed by the composition analyzer 18, and the control valve 16b is controlled on the basis of a sensing signal indicative of the analyzed gas composition for controlling the amount of the water or steam to be injected into the combustor 3 from the second nozzles 10. Thus, the amount of the steam to be generated in the combustor 3 for use in the CO shift conversion is controlled. Additionally, the apparatus has the same advantages as the apparatus shown in Fig. 2.

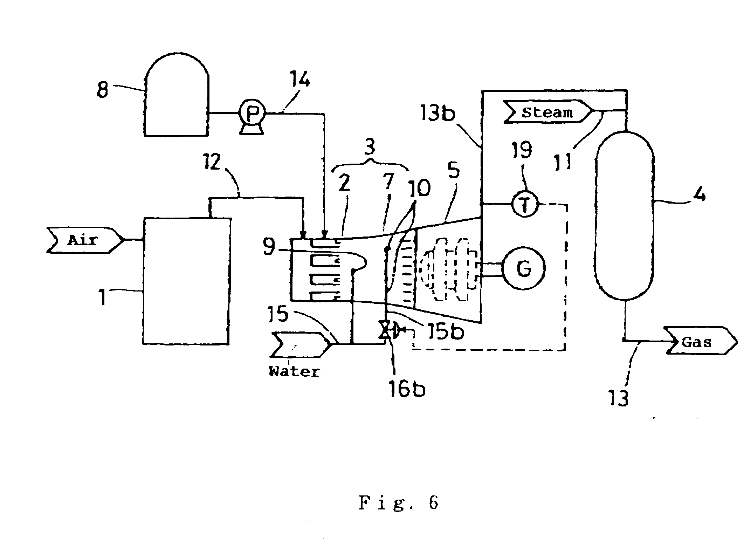

Fig. 6 is a diagram illustrating the construction of a gas generating apparatus according to a sixth embodiment of the present invention. The apparatus of the sixth embodiment has substantially the same construction as the apparatus of the second embodiment shown in Fig. 2 except for the following points. It is noted that the same components as shown in Fig. 2 are denoted by the same reference characters in Fig. 6.

The apparatus includes a control valve 16b provided at a second inlet pipe 15b for feeding water or steam to the second nozzles 10, and a third temperature sensor 19 provided at the outlet of the turbine 5 for sensing the temperature of the gas stream at the outlet of the turbine 5. The control valve 16b is controlled on the basis of a sensing signal indicative of the temperature of the gas stream at the outlet of the turbine 5 sensed by the third temperature sensor 19 for controlling the amount of the water or steam to be injected into the combustor 3 from the second nozzles 10. Thus, the temperature of the gas stream at the outlet of the turbine 5 is controlled. With this arrangement, the temperature within the turbine 5 is properly controlled for reduction of a thermal load on the turbine 5, so that the service life of the turbine 5 can be extended. Since the gas temperature control is performed at the outlet of the turbine 5, the temperature of the gas stream outputted from the turbine 5 can be controlled within a temperature range suitable for the subsequent CO shift conversion. Additionally, the apparatus has the same advantages as the apparatus shown in Fig. 2.

Fig. 7 is a diagram illustrating the construction of a gas generating apparatus according to a seventh embodiment of the present invention- The apparatus of the seventh embodiment has substantially the same construction as the apparatus of the second embodiment shown in Fig. 2 except for the following points. It is noted that the same components as shown in Fig. 2 are denoted by the same reference characters in Fig. 7.

The apparatus includes a compressor 24 for compressing the $O_2$ gas, an inlet path 25 for introducing steam into the combustor 3 for reaction temperature control, an inlet path 26 for introducing steam into the turbine 5 for cooling thereof, and a steam path 27 for introducing steam into the CO convertor 4 for CO shift conversion. In this case, the combustor 3 and the turbine 5 are provided as separate members. Additionally, the apparatus has the same advantages as the apparatus shown in Fig. 2.

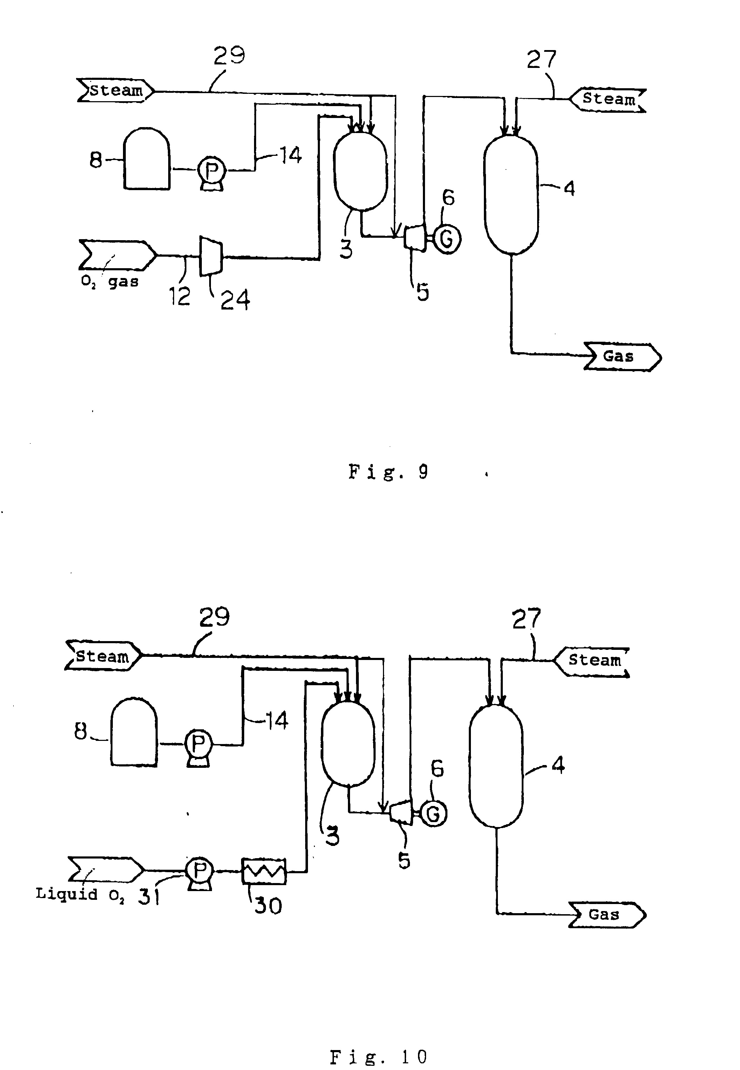

Fig. 8 is a diagram illustrating the construction of a gas generating apparatus according to an eighth embodiment of the present invention. The apparatus of the eighth embodiment has substantially the same construction as the apparatus of the seventh embodiment shown in Fig. 7, except that the compressor 24 for compressing the oxygen gas is not provided and that liquid oxygen is pressurized at a predetermined pressure level and supplied into the combustor 3 by a pump 28. It may also be possible that the liquid oxygen is evaporated in a heat exchanger and the resulting oxygen gas is supplied into the combustor 3 (see Fig. 10). In Fig. 8, the same components as shown in Fig. 7 are denoted by the same reference characters. Additionally, the apparatus has the same advantages as the apparatus shown in Fig. 7.

Fig. 9 is a diagram illustrating the construction of a gas generating apparatus according to a ninth embodiment of the present invention. The apparatus of the ninth embodiment has substantially the same construction as the apparatus of the seventh embodiment shown in Fig. 7, except that a steam path 29 for introducing the steam into the combustor 3 is provided instead of the inlet paths 25 and 26. In Fig, 9, the same components as shown in Fig. 7 are denoted by the same reference characters. Additionally, the apparatus has the same advantages as the apparatus shown in Fig. 7.

Fig. 10 is a diagram illustrating the construction of a gas generating apparatus according to a tenth embodiment of the present invention. The apparatus of the tenth embodiment has substantially the same construction as the apparatus of the ninth embodiment shown in Fig. 9, except that the compressor 24 for compressing the oxygen gas is not provided and that liquid oxygen supplied by a pump 31 is evaporated in a heat exchanger 30 and the resulting oxygen gas is supplied at a predetermined pressure into the combustor 3. In Fig. 10, the same components as shown in Fig. 9 are denoted by the same reference characters. Additionally, the apparatus has the same advantages as the apparatus shown in Fig. 9.

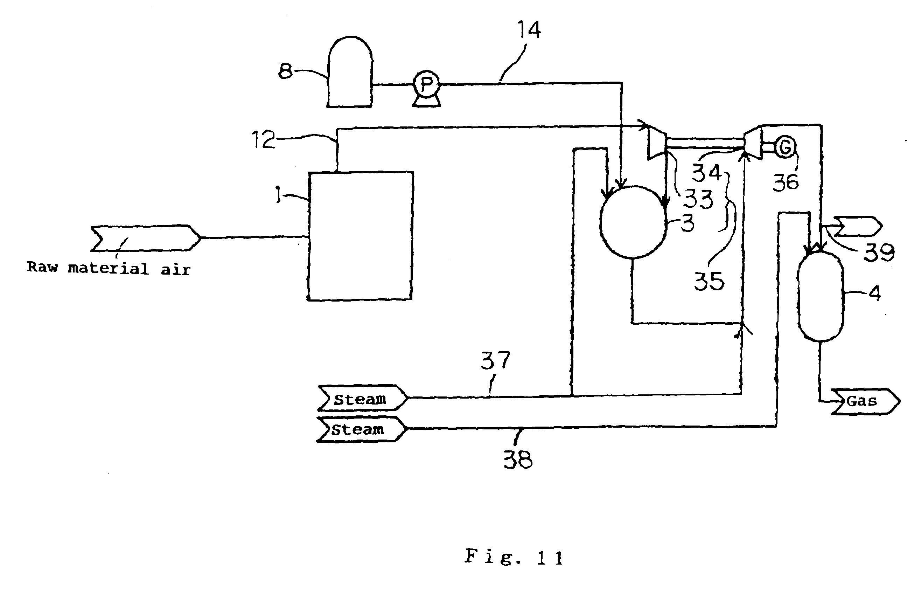

Fig. 11 is a diagram illustrating the construction of a gas generating apparatus according to an eleventh embodiment of the present invention. The apparatus employs a gas turbine, and is adapted to burn a fuel in its combustor for partial oxidation thereof and utilize the resulting combustion gas as a product gas, thereby achieving a fuel use efficiency of 100%. More specifically, the apparatus includes a combustor 3 which is supplied with $O_2$ gas produced by an oxygen producing apparatus 1 through an oxygen supplying path 12 and with raw material hydrocarbons from a fuel tank 8 through a fuel supply path 14. The $O_2$ gas to be supplied into the combustor 3 is compressed at a predetermined pressure by a compressor 33. A steam inlet pipe 37 extends into the combustor 3 for controlling the inside temperature thereof. In the combustor 3, the raw material hydrocarbons are burnt at a high temperature for reaction with $O_2$ in accordance with the above-mentioned reaction formula (1), thereby affording a gas mixture essentially containing CO and $H_2$.

A turbine 34 is provided integrally with the compressor 33 and driven by a stream of the gas mixture produced in the combustor 3. The compressor 33 is driven by power generated by the turbine 34, and an electric generator 36 is driven by an effective output which is equal to a power difference between the power generated by the turbine 34 and the power used for the driving of the compressor 33. More specifically, the combustor 3, the compressor 33 and the turbine 34 constitute a gas turbine 35, and the effective output of the gas turbine 35 is utilized as an electric power. The compressor 33 is adapted to be also driven by an external electric supply for safeguard against lower output of the turbine 34. In this case, the electric generator 36 operates as an electric motor. Thus, stable operation of the apparatus can be ensured.

The apparatus further includes a CO convertor 4 into which the gas mixture is introduced from the turbine 34. A steam inlet pipe 38 extends into the CO convertor 4 for supplying steam into the CO convertor. The gas mixture introduced into the CO convertor 4 is mixed with the steam, and brought into contact with a catalyst filled therein. The CO in the gas mixture reacts with $H_2O$ in accordance with the above-mentioned reaction formula (2) for production of $CO_2$ and $H_2$. If the CO is to be taken out of the gas mixture, a CO outlet path 39 is used.

In a conventional gas turbine, the fuel is completely burnt with air in its combustor, and the resulting combustion gas is released as an exhaust gas. In the aforesaid gas generating apparatus, on the contrary, the combustion gaa generated by burning the fuel in the combustor 3 for the partial oxidation thereof is taken out as a product gas, so that a fuel use efficiency of 100% can be achieved. Further, the oxygen is fed into the combustor 3 by the compressor 33 and, hence, it is not necessary to pressurize the oxygen to a level equivalent to the inside pressure of the combustor 3, but to supply the oxygen into the combustor 3 at atmospheric pressure. Since the compressor 33 is provided integrally with the turbine 34, the plant scale can be further reduced.

In any of the foregoing embodiments, liquid oxygen may be supplied into the combustor 3 instead of the $O_2$ gas. Although the effective output of the turbine 5, 34 is used in the form of electric power in the embodiments, the form of the effective output is not limited thereto. For example, the effective output may be used in the form of kinetic energy for rotating a shaft or for producing a jet stream. The gas mixture of $H_2$ and CO resulting from the partial oxidation is subjected to the CO shift conversion process for generation of a hydrogen-rich gas, but the process to be performed after the production of the gas mixture is not particularly limited. For example, the $H_2$ and CO may be separated from the gas mixture, or may be taken out as a mixture thereof. Further, the combustor 3 to be used is not particularly limited, but a combustor for a jet engine or a rocket may be used. Where the rocket combustor is used as the combustor 3, the turbine 5, 34 is driven by a jet stream ejected at a very high speed from the rocket combustor, so that the power of the turbine 5, 34 can be increased. Thus, the apparatus, even with a higher power generation capacity, has a reduced size, thereby ensuring easy plant shift and plant extension.

As described above, the gas generating apparatus utilizes the stream of the gas mixture produced in the combustor for the driving of the turbine. Therefore, the large-scale high pressure boiler can be obviated which has been required for cooling the gas mixture produced in the combustor. Further, the high capacity steam turbine can also be obviated. Accordingly, the apparatus has a compact construction with lower initial costs, and ensures easy plant shift and plant extension. In the gas generation process of the present invention, which utilizes the aforesaid highly effective gas generating apparatus, the gas mixture essentially containing carbon monoxide and hydrogen is produced in the combustor and the turbine is driven by the stream of the gas mixture.

Where the combustor is connected to the turbine in series, the turbine can be driven directly by the stream of the gas mixture outputted from the combustor with little loss of the gas stream and with a high efficiency. Thus, the apparatus has a reduced size and ensures easy plant shift and plant extension.

Where the apparatus includes the compressor which is provided integrally with the turbine and adapted to be driven by the power of the turbine so that a difference between the power generated by the turbine and the power required for the driving of the compressor can be utilized as an effective output, part of the power generated by the turbine can be utilized for the driving of the compressor thereby to reduce running costs such as an electricity cost.

Where the apparatus includes the convertor for allowing the carbon monoxide in the gas mixture passed through the turbine to react with steam for CO shift conversion into carbon dioxide and hydrogen, the gas mixture produced in the combustor can be subjected to the CO shift conversion in the convertor, so that hydrogen gas can be obtained at a high concentration.

## Claims

1. A gas generating apparatus comprising a combustor for reacting a raw material hydrocarbon with oxygen at a high temperature for partial oxidation thereof to produce a gas mixture substantially consisting of carbon monoxide and hydrogen; and a turbine which is driven by a stream of the gas mixture produced in the combustor for generation of power; wherein the power generated by the turbine is utilised as an effective output.

2. A gas generating apparatus as set forth in Claim 1, wherein the combustor is connected to the turbine in series.

3. A gas generating apparatus as set forth in Claim 1, further comprising a compressor which is provided integrally with the turbine and adapted to be driven by the power generated by the turbine, so that a difference between the power generated by the turbine and power required for the driving of the compressor can be utilised as an effective output.

4. A gas generating apparatus as set forth in any of Claims 1 to 3, further comprising a convertor for allowing the carbon monoxide in the gas mixture passed through the turbine to react with steam for CO shift conversion into hydrogen and carbon dioxide.

5. A gas generating apparatus according to any one of the preceding Claims wherein the turbine is connected to rectification section for rectifying the high temperature and high pressure gas generated in the combustor, means being provided for introducing steam or water into the rectification section.

6. A gas generator apparatus according to Claim 5 wherein the means for introducing steam or water are located adjacent the turbine.

7. A gas generation apparatus according to any one of the preceding Claims wherein means are provided to inject water or steam into the combustor.

8. A gas generation process comprising the steps of supplying a raw material hydrocarbon and oxygen into a combustor; reacting the raw material hydrocarbon with the oxygen at a high temperature in the combustor for partial oxidation thereof for production of a gas mixture substantially consisting of carbon monoxide and hydrogen; driving a turbine by a stream of the gas mixture produced in the combustor for generation of power; and utilising the power generated by the turbine as an effective output.

9. A process according to Claim 9 comprising the step of introducing steam or water to the combustor.

Fig. 1

Fig. 2

Fig. 3

Fig. 4

Fig. 5

Fig. 6

Fig. 7

Fig. 8

Fig. 9

Fig. 10

Fig. 11

PRIOR ART

Fig. 12